# EUROPÄISCHE PATENTSCHRIFT

(11) **EP 0 574 946 B1**
(45) Veröffentlichungstag und Bekanntmachung des Hinweises auf die Patenterteilung: **04.06.1997**
(21) Anmeldenummer: 93109799.2
(22) Anmeldetag: 18.06.1993
(51) Int. Cl.: C08G 85/00, C08F 2/46

(54) **Verfahren zur Herstellung von Ionen- Und Eletronenleitenden Polymeren**
Process for the preparation of ion-conductive and electron-conductive polymers
Procédé de préparation de polymères à conduction ionique et par électrons

(30) Priorität: 19.06.1992 DE 4220171
(43) Veröffentlichungstag der Anmeldung: 22.12.1993
(73) Patentinhaber: LSG LÖT-UND SCHWEISSGERÄTE GmbH, D-73773 Aichwald (DE)
(72) Erfinder: Frey, Hartmut, Dipl.-Ing., W-73730 Esslingen (DE); Schöllkopf, Volker, W-73087 Bad Boll (DE)

(56) Entgegenhaltungen:
- EP-A- 0 132 684
- DE-A- 2 835 625
- DE-A- 3 541 721
- PATENT ABSTRACTS OF JAPAN vol. 13, no. 187 (C-592)2. Mai 1989 & JP-A-01 014 247 (JAPAN STORAGE BATTERY CO LTD) 18. Januar 1989
- PATENT ABSTRACTS OF JAPAN vol. 13, no. 105 (C-575)13. März 1989 & JP-A-63 277 764 (KANEBO LTD) 15. November 1988
- PATENT ABSTRACTS OF JAPAN vol. 13, no. 187 (C-592)2. Mai 1989 & JP-A-01 014 247
- PATENT ABSTRACTS OF JAPAN vol. 13, no. 105 (C-575)13. März 1989 & JP-A-63 277 764

## Beschreibung

Die Erfindung betrifft ein Verfahren zur Herstellung 0,1 bis 100 µm dünner ionenleitender beziehungsweise elektronenleitender Polymerfolien durch eine Kombination der Ionenstrahlpolymerisation mit der Methode der Ionenstrahlmischung. Polymere unterscheiden sich von anderen Festkörpern dadurch, daß in ihnen die chemischen Bindungen vorwiegend gerichtet auftreten (kovalente Bindungen). Dadurch sind zum Beispiel die Elektronen weitgehend lokalisiert, und die Energiebänder sind sehr schmal und ganz gefüllt oder ganzleer, so daß diese Substanzen als Isolatoren wirken. Nur in Polymeren mit ungesättigten Bindungen (Doppelbindungen) liegen teilweise gefüllte Energiebänder vor. Infolge der gerichteten Bindungskräfte bilden sich häufig bevorzugt niedrigdimensionale Strukturen, wobei die einzelnen Monomergruppen kettenartig oder schichtartig verknüpft sind. Polymerketten aus ungesättigten Kohlenwasserstoffen können von der Theorie her als eindimensionale Festkörper aufgefaßt werden, die alle Spielarten - vom Isolator über den Halbleiter bis zum Metall - zeigen, aber auch durch den Eingabe saurer Gruppen ionenleitende Eigenschaften aufweisen können.

Membranen aus Polymeren mit solchen funktionellen Gruppen zeigen eine unterschiedliche Sperrwirkung für Gegen- und Co-Ionen zum Beispiel in Elektrolytlösungen. Diese Eigenschaft der Kationenpermselektivität in Verbindung zum Beispiel mit den vorteilhaften Werkstoffeigenschaften der Fluorpolymere erlaubt neue Wege der Verfahrenstechnologie zu beschreiten, die aber an die Verfügbarkeit dieser Materialien gekoppelt sind. Solche Membranen haben wegen der ausgezeichneten chemischen und thermischen Beständigkeit auch Bedeutung bei der elektrochemischen Energiewandlung. Sie werden in Brennstoffzellen und bei der Wasserelektrolyse eingesetzt. Auch bei der Entsorgung von Salzabfällen und der Freisetzung organischer Säuren, das heißt bei der Elektrodialyse mit bipolaren Membranen, lassen sich ionenleitende Polymerfolien hervorragend einsetzen. Allerdings sind die Herstellungskosten mit den gegenwärtig benutzten Verfahren der Monomersynthese, der anschließenden Polymerisation und der elektrochemischen Funktionalisierung noch zu teuer, um die so hergestellten ionenleitenden Folien bei Energiewandlung einsetzen zu können.

Es war daher Aufgabe der vorliegenden Erfindung, ein Verfahren zur Herstellung dünner Polymerfolien mit entsprechenden Funktionseigenschaften wie elektronischer beziehungsweise ionischer Leitfähigkeit zu entwickeln. Diese Aufgabe wird gelöst durch das Verfahren gemäß den Patentansprüchen. Diese Aufgabe wird erfindungsgemäß dadurch gelöst, daß ein Monomer direkt der Entladungskammer einer elektrodenlosen Ionenquelle zugeführt wird. Als Monomere kann man beispielsweise Verbindungen der Formeln: CF₂ = CF₂; CH₂ = CH₂; CF₂ = CFCl; CH₂ = CHCl; CH₂ = C = (CH₃)₂; CH₂ = CHOH; CH₂ = CH - CH = CH₂; CH₂ = CH - OR₁; CH₂ = CH - O - COR₂; CH₂ = CH - COOR₁; CH₂ = O; R₃ - N = C = O; CF₂ = SO₂; CF₃ - CF₂ - SO₃H; 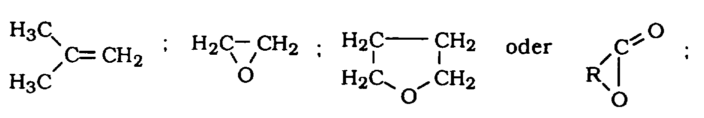 nennen, worin R₁ ein Wasserstoffatom, ein Metallatom, eine aliphatische Gruppe oder eine aromatische Gruppe, beispielsweise eine C₁-C₆-Alkylgruppe oder eine Arylgruppe, wie eine Phenylgruppe, R₂ ein Wasserstoffatom, eine Hydroxylgruppe, ein Metallatom, eine aliphatische oder eine aromatische Gruppe, beispielsweise eine C₁-C₆-Alkylgruppe oder eine C₁-C₆-Alkoxygruppe, oder eine Arylgruppe, wie eine Phenylgruppe, oder eine Aryloxygruppe, wie eine Phenoxygruppe, R₃ eine aliphatische oder aromatische Gruppe, vorzugsweise eine C₁-C₆-Alkylgruppe oder eine Phenylgruppe und R eine zweiwertige aliphatische oder aromatische Gruppe bedeuten. deuten. R kann beispielsweise ein Benzolring sein, bei dem ein Ringatom - Kohlenstoff oder Wasserstoff - durch einen Elektronen-Atomstoß derart angeregt ist, daß das angeregte Ringatom bevorzugt eine Bindung mit einem freien Ion oder angeregten Atom bzw. Molekül eingeht.

R kann aber auch ein angeregtes Metallatom bzw. ionisiertes Metallatom sein, aber auch ein angeregtes Oxid, Karbid, Borid oder Silizid.

Das Monomer dissoziiert in der Entladungskammer zu C- und F-Atomen bzw. C- und H- bzw. C-, H- und S- bzw. C-, H-, O- und S-Atomen; die Atome werden, je nach lonenquellenart, anschließend zu etwa 10 bis 20% ionisiert. Die C⁺, F⁺, H⁺, O⁺, S⁺ usw.-Ionen werden mittels eines Extraktionssystems auf Energien zwischen 10 eV und 5 keV beschleunigt und gegen eine Substratoberfläche gelenkt. Die unterschiedlichen Ionenarten reagieren dort mit den Neutralgasatomen und untereinander; es kommt dabei zur Polymerisation.

Eine andere Methode besteht darin, das Monomer mittels einer Gasdüse über die Substratoberfläche zu führen, wobei die Dissoziation des CF₂ = CF₂-Monomers mittels eines Edelgasionenstroms aus der Ionenquelle und anschließend die Polymerisation auf der Substratoberfläche erfolgt.

Beide beschriebenen Ionenstrahlpolymerisationsverfahren laufen im Vakuum bei einem Arbeitsgasdruck zwischen 10⁻⁴ mbar und 10⁻² mbar ab. Werden beispielsweise aus einer zweiten Ionenquelle, deren Strahlführung derart ausgebildet ist, daß sich beide Ionenstrahlen auf der Substratoberfläche mischen, Alkaliionen extrahiert und in die sich bildende Polymerschicht eingebaut, entsteht ein Elektronenleiter. Der Beschuß mit einem Wasserstoff-Sauerstoffionengemisch führt zum Beispiel zu einem Ionenleiter. Die Strahlendosis liegt dabei je nach gewünschter Polymerzusammensetzung zwischen 10¹⁶ und 10²¹ Teilchen/cm². Durch zeitliche Variation der Ionendosis lassen sich auch Polymerschichtsysteme mit unterschiedlichen Leitfähigkeitszonen herstellen, zum Beispiel für Polymersolarzellen.

## Patentansprüche

1. Verfahren zur Herstellung von ionen- und elektronenleitenden Polymeren mit polaren, reaktiven Gruppen für technisch hochwertige Anwendungen durch die Kombination der Ionenstrahlpolymerisationsmethode mit der Methode der Ionenstrahlmischung, **dadurch gekennzeichnet,** daß gasförmige Monomere einer Ionenquelle im Entladungsraum der Ionenquelle dissoziiert und teilweise ionisiert und die Ionen mittels eines Ionenquellenextraktionssystems mit Energien zwischen 20 und 200 eV auf ein Substrat, auf dessen Oberfläche die Polymerisation stattfindet, hin beschleunigt werden, und mittels einer zweiten Ionenquelle gezielt solche Ionen, die die polaren, reaktiven Gruppen bilden und für die Ionenleitung verantwortlich sind, mit einer Energie zwischen 100 eV und 10 keV in die sich entwickelnde Polymerschicht eingeschossen werden.

2. Verfahren nach Anspruch 1, **dadurch gekennzeichnet,** daß mittels der zweiten Ionenquelle durch Dotieren mit den Akzeptoren Jod, AsF₅, FeCl₃, BF₄⁻ oder ClO₄⁻, oder mit Alkalimetallen als Donatoren elektronenleitende Polymere hergestellt werden.

3. Verfahren nach Anspruch 1 und 2, **dadurch gekennzeichnet,** daß das Monomergas nicht direkt der ersten Ionenquelle zugeführt, sondern über die Substratoberfläche geführt wird und die Polymerisation dann mittels Edelgasionen, die aus der ersten Ionenquelle mit einer Energie zwischen 100 eV und 5 keV extrahiert werden und die auf das Monomergas treffen, angeregt wird.

4. Verfahren nach Anspruch 1 bis 3, **dadurch gekennzeichnet,** daß das Monomergas mit einem Edelgas gemischt direkt der ersten Ionenquelle zugeführt wird.

5. Verfahren nach Anspruch 1 bis 4, **dadurch gekennzeichnet,** daß die polymerisierende Schicht mit einer Dosis von 10¹⁵ bis 10²² Teilchen/cm² bestrahlt wird.

6. Verfahren nach Anspruch 1 bis 5, **dadurch gekennzeichnet,** daß die polymerisierende Schicht mit einer zeitlich veränderlichen Dosis von 10¹⁵ bis 10²² Teilchen/cm² bestrahlt wird.

## Claims

1. A method for the manufacture of ion- and electron-conducting polymers containing polar reactive groups for high-grade technical application, by combining the method of ion-beam polymerization with the method of ion-beam mixing, **characterized in that** gaseous monomers of an ion source are dissociated in the discharge space of the ion source and partly ionized, and that the ions are accelerated by means of an ion source extraction system with energies between 20 and 200 eV in the direction to a substrate on the surface of which polymerization is effected, and that by means of a second ion source specifically such ions which form the polar reactive groups and are responsible for ion conduction are injected into the developing polymer layer with an energy between 100 eV and 10 keV.

2. The method as claimed in claim 1, **characterized in that** electron-conducting polymers are prepared by means of the second ion source by doping with the acceptors iodine. AsF₅, FeCl₃, BF₄- or ClO₄-, or with alkali metals as donors.

3. The method as claimed in claims 1 and 2, **characterized in that** the monomer gas is not supplied directly to the first ion source but is guided over the substrate surface, and polymerization is then stimulated by means of noble gas ions which are extracted from the first ion source with an energy between 100 eV and 5 keV and directed to the monomer gas.

4. The method as claimed in claims 1 to 3, **characterized in that** the monomer gas, mixed with a noble gas, is supplied directly to the first ion source.

5. The method as claimed in claims 1 to 4, **characterized in that** the polymerizing layer is radiated with a dose of 10¹⁵ to 10²² particles /cm².

6. The method as claimed in claims 1 to 5, **characterized in that** the polymerizing layer is radiated with a time-variable dose of 10¹⁵ to 10²² particles/cm².

## Revendications

1. Procédure de production de polymères conductrices d'ions et d'électrons contenant des groupes polaires réactifs pour des applications techniques de haut niveau, en combinant la méthode de polimérisation des rayons d'ions avec la méthode de mixage des rayons d'ions, **caractérisé par le fait**
- que les monomères gazeux d'une source d'ions sont dissociés dans l'espace de déchargement de la source d'ions et partiellement ionisés, et
- que les ions sont accélérés au moyen d'un système d'extraction des sources d'ions avec des énergies entre 20 et 200 eV en direction d'un substrat à la surface de laquelle la polymérisation est effectuée, et
- qu'à l'aide d'une deuxième source d'ions, spécifiquement ces ions-là qui forment les groupes polaires réactifs et qui sont responsables pour la conduite d'ions, sont alors injectés avec une énergie entre 100 eV et 10 keV dans la couche de polymère se formant.

2. Procédure satisfaisant les exigences 1, **caractérisée par le fait** qu'avec la deuxième source d'ions des polymères conductrices d'électrons sont produites par une dotation avec les acceptors d'iode, AsF₅, FeCl₃, BF₄- ou ClO₄-, ou bien avec des métaux alcalins comme donateurs.

3. Procédure satisfaisant les exigences 1 et 2, **caractérisée par le fait** que le gaz monomère n'est pas amené directement à la première source d'ions mais il est dirigé sur la surface du substrat, et la polymérisation est alors stimulée au moyen d'ions de gaz noble qui sont extraits de la première source d'ion avec une énergie entre 100 eV et 5 keV et qui sont dirigés sur le gaz monomère.

4. Procédure satisfaisant les exigences 1 à 3, **caractérisée par le fait** que le gaz monomère, mélangé à un gaz noble, est directement amené à la première source d'ions.

5. Procédure satisfaisant les exigences 1 à 4, **caractérisée par le fait** que la couche polymérisante est irradiée avec une dose de 10¹⁵ à 10²² particules/cm².

6. Procédure satisfaisant les exigences 1 à 5, **caractérisée par le fait** que la couche polymérisante est irradiée avec une dose de 10¹⁵ à 10²² particules/cm², qui peut varier dans le temps.
